(19) Europäisches Patentamt
European Patent Office
Office européen des brevets

(11) Publication number: 0 385 592 A2

# (12) EUROPEAN PATENT APPLICATION

(21) Application number: 90301292.0

(51) Int. Cl.[5]: C08J 5/06

(22) Date of filing: 07.02.90

(30) Priority: 14.02.89 JP 32803/89

(43) Date of publication of application: 05.09.90 Bulletin 90/36

(84) Designated Contracting States: DE FR GB

(71) Applicant: UBE INDUSTRIES, LTD.
12-32, Nishihonmachi 1-chome
Ube-shi, Yamaguchi-ken(JP)

(72) Inventor: Tanaka, Hideho, c/o Hirakata Laboratory
Ube Industries, Ltd., 3-10, Nakamiyakita-machi
Hirakata-shi, Osaka-fu(JP)
Inventor: Hirano, Yasuo, c/o Hirakata Laboratory
Ube Industries, Ltd., 3-10, Nakamiyakita-machi
Hirakata-shi, Osaka-fu(JP)
Inventor: Taga, Takefumi, c/o Hirakata Laboratory
Ube Industries, Ltd., 3-10, Nakamiyakita-machi
Hirakata-shi, Osaka-fu(JP)

(74) Representative: Myerscough, Philip Boyd et al
J.A.Kemp & Co. 14, South Square Gray's Inn
London, WC1R 5EU(GB)

## (54) Method of treating inorganic fiber and inorganic fiber-reinforced composite material.

(57) A method of treating an inorganic fiber capable of giving an inorganic fiber-reinforced composite material or prepreg-laminated material having excellent mechanical strength, which comprises:
subjecting at least one inorganic fiber selected from the group consisting of
an inorganic fiber containing silicon, M, carbon and oxygen and comprising

i) a non-crystalline substance consisting essentially of Si, M, C and O,

ii) an aggregate composed of crystalline fine particles consisting essentially of β-SiC, MC, a solid solution of β-SiC and MC and $MC_{1-x}$ and having a particle diameter of not more than 500Å, noncrystalline $SiO_2$ and noncrystalline $MO_2$, or

iii) a mixture of the non-crystalline substance specified in the above i) with the aggregate specified in the above ii) wherein M represents Ti or Zr and x is a numerical value satisfying $0<x<1$,

and,
a silicon carbide fiber
to heat treatment at a temperature between 400°C and 1,000°C under oxygen-containing atmosphere, and then
subjecting the heat-treated inorganic fiber to surface treatment with a silane-coupling agent.

EP 0 385 592 A2

# Method of treating inorganic fiber and inorganic fiber-reinforced composite material

## FIELD OF THE INVENTION

The present invention relates to a method of treating an inorganic fiber containing silicon, M (Ti or Zr), carbon and oxygen (to be referred to as Si-M-C-O fiber hereinbelow) or a silicon carbide fiber, and a composite material comprising a treated inorganic fiber and a thermosetting resin.

## PRIOR ART OF THE INVENTION

Carbon fiber-reinforced resin composite materials have high strength/weight ratio and specific modulus, and are therefore widely used in the fields of sport and leisure industry, general industry, and aircraft and space industry. However, the carbon fiber has a problem that the bonding strength thereof to a matrix resin is inferior due to its poor chemical affinity with the resin. When the carbon fiber is used as a reinforcing fiber without any treatment, failure of a composite material is liable to occur in the interface between its resin and fiber, and the strength at right angles with the fiber (to be referred to as 90° direction) or interlaminar shear strength is degraded. Hence, it is general practice to add special surface treatment to the carbon fiber. Further, a resin composite material using the surface-treated carbon fiber has defects of low elongation and low impact resistance.

As a substitute material for the carbon fiber-reinforced resin composite material, there is proposed a silicon carbide-reinforced resin composite material, or a composite material reinforced with an inorganic fiber composed of one of silicon, titanium and zirconium, carbon and oxygen, as is described in Japanese Laid-Open Patent Publication No. 57427/1987. It is generally thought that the inorganic fibers used in these composite materials have better wettability with matrix resins than carbon fibers. In particular, the above Japanese Laid-Open Patent Publication No. 57427/1987 describes that even without any special surface treatment, they can give composite materials of which the tensile strength and flexural strength in the 90° direction are high, the interlaminar shear strength is high and further, the Charpy impact strength is also high, since the above inorganic fibers have good wettability with resins. Inorganic-fiber reinforced materials have been recently further required to have improved compression characteristics or shear properties typified by in-plane shear properties, and in view of these requirements, the composite materials described in the above Publications are still with problems which should be solved.

Japanese Laid-Open Patent Publication No. 118439/1986 describes that the mechanical strength of a resin composite material reinforced with a ceramic fiber such as a glass fiber, silica fiber, alumina fiber, or the like., is improved by treating the above ceramic fiber with a silane-coupling agent.

It may therefore be attempted to treat the silicon carbide fiber or the inorganic fiber of the above Japanese Laid-Open Patent Publication No. 57427/1987 with a silane coupling agent for reinforcement of resins with the treated inorganic fiber. The present inventors' experiment has shown, however, that the strength of composite materials cannot be sufficiently increased according to this procedure.

## SUMMARY OF THE INVENTION

It is an object of the present invention to provide a method of treating an inorganic fiber, which can give an inorganic fiber-reinforced composite material or prepreg-laminated material having excellent mechanical strength.

It is another object of the present invention to provide a method of treating an inorganic fiber, which can give an inorganic fiber-reinforced composite material or prepreg-laminated material having excellent compression characteristics or shear properties, in-plane shear properties in particular.

It is further another object of the present invention to provide an inorganic fiber-reinforced composite material or prepreg-laminated material having excellent mechanical strength.

According to the present invention, there is provided a method of treating an inorganic fiber, which comprises:
subjecting at least one inorganic fiber selected from the group consisting of
an inorganic fiber containing silicon, M, carbon and oxygen and comprising

i) a non-crystalline substance consisting essentially of Si, M, C and O,

ii) an aggregate composed of crystalline fine particles consisting essentially of $\beta$-SiC, MC, a solid

solution of β-SiC and MC and $MC_{1-x}$ and having a particle diameter of not more than 500Å, noncrystalline $SiO_2$ and noncrystalline $MO_2$, or

iii) a mixture of the non-crystalline substance specified in the above i) with the aggregate specified in the above ii) wherein M represents Ti or Zr and x is a numerical value satisfying $0<x<1$,

and,

a silicon carbide fiber

to heat treatment at a temperature between 400 ° C and 1,000 ° C under oxygen-containing atmosphere, and then

subjecting the heat-treated inorganic fiber to surface treatment with a silane-coupling agent.

BRIEF DESCRIPTION OF THE DRAWINGS

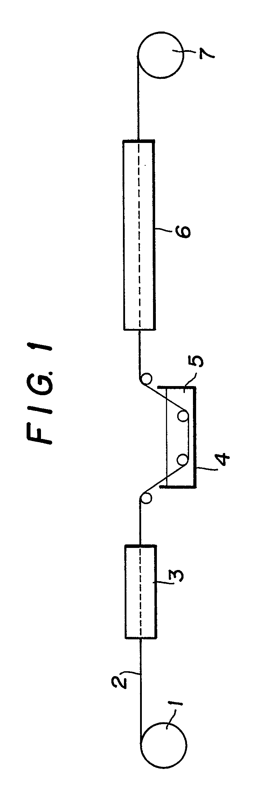

Figure 1 shows a schematic view of a treating apparatus in which the method of treating an inorganic fiber, provided by the present invention, can be carried out as a continuous process.

DETAILED DESCRIPTION OF THE INVENTION

The Si-M-C-O fiber used in the present invention can be prepared according to a process described, e.g. in Japanese Patent Publication No. 1405/1985, 5286/1983, 20485/1985, or 44403/1984. And, this Si-M-C-O fiber is commercially available under a trade name of "Tyranno" from Ube Industries, Ltd.

The silicon carbide fiber treated in the present invention can be preapred according to a process described, e.g. in Japanese Patent Publication No. 38534/1983 or 53892/1982, and commercially available under a trade name of Nicalon from Nippon Carbon K.K.

In the method of treating an inorganic fiber as the first aspect of the present invention, these inorganic fibers which are bundled with a known sizing agent are usable.

In the present invention, these inorganic fibers are heat-treated at 400 to 1,000 ° C, preferably 500 to 800 ° C under oxygen-containing atmosphere.

As gases for the oxygen-containing atmosphere, air is conveniently usable, and pure oxygen or a mixture gas prepared by diluting pure oxygen with an inert gas is also usable.

In the treating method of the present invention, it is assumed that oxygen is introduced onto the inorganic fiber surface to form $SiO_2$, and then a silanol group, a functional group existing on the surface of the $SiO_2$, reacts with a silane coupling agent which will be discussed later, although this is one assumption to which the present invention shall not be limited.

When the above heat treatment temperature is lower than 400 ° C, it is not possible to obtain any composite material having high mechanical strength, or high compressive and shear strengths in particular, even if the inorganic fiber is surface-treated with the silane coupling agent. When the inorganic fiber is heat-treated at a temperature of higher than 1,000 ° C, the inorganic fiber per se is thermally deteriorated, and its strength or elastic modulus is degraded.

The time for the heat treatment is determined depending upon the heat treatment temperature, and in general, it is 5 seconds to 2 minutes, preferably 10 seconds to 1 minute.

The inorganic fiber can be heat-treated under a batch system or continuous system, and the continuous system is industrially preferable. For example, the inorganic fiber can be continuously heat-treated by passing a filament yarn, which is a continuous yarn of the inorganic fiber, through a heating oven, e.g. electric oven, adjusted to the above temperature range.

In the present invention, the heat-treated inorganic fiber is then surface-treated with a silane coupling agent, and any known silane coupling agents are usable. Examples thereof are those represented by the following formula.

$Z(CH_2)_nSi(OR)_3$

wherein Z is selected from the group consisting of Cl-,

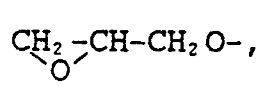

$NH_2CONH$-, and $Y[NH(CH_2)_m]_xNH$- in which x is 0 or 1, m is an integer of 1 to 10, Y is selected from a hydrogen atom, an aryl group having 6 to 10 carbon atoms and an aryl alkylene group having 6 to 10

carbon atoms, n is an integer of 1 to 10, and R is a hydrogen atom or an alkyl group having 1 to 6 carbon atoms.

Among these silane coupling agents, aminoalkyl-substituted silane may be a salt of an acid such as hydrochloride, acetate, formate, or the like.

The silane coupling agent is suitably selected depending upon what thermosetting resin is used as a matrix of the composite material.

Specific examples of the silane coupling agent include N-phenyl-γ-aminopropyltrimethoxysilane, N-β-(aminoethyl)-γ-aminopropyltrimethoxysilane, γ-aminopropyltriethoxysilane, hydrochloride of N-β-(aminobenzylethyl)-γ-aminopropyltrimethoxysilane, γ-ureidopropyltriethoxysilane, γ-glycidoxypropyltrimethoxy-silane, and γ-chloropropyltrimethoxysilane. These silane coupling agents may be used in combination.

The silane coupling agent is generally used in a form of a solution or emulsion prepared by diluting it in a solvent. Examples of the solvent are water, alcohol, acetone, etc., and water is usually conveniently usable. The concentration of the silane coupling agent in a water solution is 0.01 to 1 % by weight, particularly preferably 0.05 to 0.5 % by weight. In addition, for some of the silane coupling agents, it is necessary to adjust pH of water to acidic nature in order to dissolve them in the water. In this case, acetic acid, formic acid, etc., may be added. Examples of such silane-coupling agents requiring the water pH adjustment are γ-chloropropyltrimethoxysilane which is soluble in water having pH of 4 to 4.5, and N-phenyl-γ-aminopropyltrimethoxysilane which is soluble in water having pH of 2 to 4.

When the inorganic fiber is surface-treated with the silane coupling agent, a small amount of a known sizing agent or lubricant may be co-used.

There is no special limitation to be placed on the surface treatment of the inorganic fiber with the silane coupling agent. The surface-treatment is achieved, e.g. by immersing the heat-treated inorganic fiber in a solution of the silane-coupling agent and then heating it at 100 to 150°C for 1 minute to 30 minutes. It is assumed that this surface treatment involves a reaction between a silanol group formed on the surface of the heat-treated inorganic fiber and the silane coupling agent.

The amount of the silane coupling agent adhering to the inorganic fiber is 0.01 to 1 part by wight, particularly preferably 0.05 to 0.5 part by weight, based on 100 parts by weight of the heat-treated inorganic fiber. When the amount of the silane coupling agent is small to excess, there is no remarkable effect on improvement in physical properties of a resin composite material reinforced with the inorganic fiber treated according to the present invenntion. Further, no technical meaning is recognizable in increasing the amount of the silane coupling agent to excess.

The heat treatment and the surface treatment with the silane coupling agent may be carried out as an isolated discontinuous two-stage process. However, the above two treatment procedures are industrially preferably carried out in one continuous process.

Figure 1 is a schematic view of an apparatus using one example of the continuous process. In Figure 1, an inorganic fiber 2 unwound from a bobbin 1 is heat-treated in a heating oven 3, and then allowed to pass through a treatment vessel 4 containing a silane coupling agent solution 5. Further, it is surface-treated while passing through a heating oven 6, and wound back around a bobbin 7.

The inorganic fiber treated according to the method of the present invention may be used in an as-treated state as a reinforcing fiber for a composite material. Or, it may be woven to a fabric, knitted to a string or braided to a rope, and the fabric, string or rope may be used as a reinforcing material.

In the second aspect of the present invention, there is provided a thermosetting resin composite material containing a reinforcing material of the inorganic fiber treated as specified in the first aspect.

Typical examples of the thermosetting resin include epoxy resin, bismaleimide resin, polycyanate resin, unsaturated polyester resin, phenolic resin, polyimide resin, etc.

Examples of the composite material of the present invention include articles formed by impregnating the inorganic fiber with a thermosetting resin and directly curing the resin, and prepregs prepared by impregnating the inorganic fiber with a thermosetting resin in a state that it retains tacky nature.

The formed articles can be prepared according to a known method. Typical examples of the forming method include filament winding method, pultrusion method, resin injection method and braiding method. These forming methods are carried out by shaping the inorganic fiber, impregnating it with a resin and curing the resin, or by impregnating the inorganic fiber with a resin, shaping it and then curing the resin.

Examples of the formed articles include relatively simply formed articles such as plates, rods, pipes, etc., and further include more complicated, three-dimensionally formed ones.

The prepregs can be prepared, in general, by impregnating the inorganic fibers unidirectionally arranged or a fabric of the inorganic fibers with a molten resin or a solution of a resin in a solvent, or by winding the inorganic fiber impregnated with a resin around a drum and then removing volatile components

under heat to bring the prepregs into a state that the resin has tacky nature.

The prepreg is generally in a sheet form, and the thickness thereof is preferably 10 to 300 µm, particularly preferably 50 to 200 µm. The residual solvent amount in the prepreg concerning the tacky nature of the prepreg differs depending upon what resin is used. In view of ease in handling, this amount is preferably not more than 1 % by weight in the case of the epoxy resin and polycyanate resin, and it is preferably about 7 to 8 % by weight in the case of polyimide resin (addition type).

Examples of the solvent used in the prepreg preparation include acetone, methyl ethyl ketone, methyl cellosolve, etc., for the epoxy and polycyanate resins, and N-methyl-2-pyrrolidone, dimethylacetamide, dimethylformamide, etc., for the bismaleimide and polyimide resins.

The curing conditions for the above formed articles or the heating conditions for the-prepregs differ depending upon what thermosetting resin or solvent is used, and one of ordinary skill in the art may select suitable conditions.

The proportion of the inorganic fiber in the composite material is preferably 30 to 80 % by volume, particularly preferably 45 to 65 % by volume.

In the third aspect of the present invention, there is provided a laminated material produced from the prepregs prepared as specified in the second aspect.

The laminated material is prepared, in general, by laminating the prepregs by a hand lay-up method or automatic lay-up method and then curing the resin under heat and pressure. The lamination structure of the laminated material is not specially limited, and determined according to the functional requirement of a final product in view of its performance.

There is no special restriction to be placed on the molding method for the laminated material, and any known molding methods are usable, such as vacuum bag/autoclave molding, press-molding, sheet winding, sheet wrap, tape winding, tape wrapping, etc. The curing conditions such as temperature, pressure, time, etc., may be suitably selected depending upon what thermosetting resin is used. For example, when the most typical example, epoxy resin, is used, the curing temperature is 120 to 200 °C. Further, it is general practice to carry out a post-cure after the thermosetting resin is cured.

According to the present invention, there is provided a method of treating the inorganic fiber, which can give an inorganic fiber-reinforced composite material or prepreg-laminated material having excellent mechanical strength and shear strength, compression and in-plane shear strengths in particular.

According to the present invention, there is provided an inorganic fiber-reinforced composite material or prepreg-laminated material having excellent mechanical strength.

## EXAMPLES

The present invention will be explained further in detail hereinbelow.

Various properties discussed in Examples were evaluated in the following methods.

### (1) Measurement of the amount of a silane coupling agent adhering to an inorganic fiber:

The measurement was carried out according to JIS R7601, in which a sample was thermally decomposed at 600 °C. The unit for the amount of a silane coupling agent adhering to an inorganic fiber hereinbelow is part by weight based on 100 parts by weight of the inorganic fiber.

### (2) Analysis of prepregs:

A resin content and a volatile component content were measured according to ASTM C613.

### (3) Measurement of the mechanical properties of a laminated material:

The mechanical properties were measured by using an Instron tensile tester model 1185 at 23 °C and a relative humidity of 50 %. Flexural tests were carried out according to a three-point bending test at a span/thickness ratio of 32. Volume contents of fibers (Vf) were measured according to ASTM D3171.

| Test | Thickness mm | Width mm | Length mm | Number of samples | Testing rate mm/min | ASTM |
|---|---|---|---|---|---|---|
| Tensile 0° | 2 | 12.7 | 260 | 5 | 2 | D3039 |
| 90° | 2 | 25.4 | 200 | 5 | 0.5 | |
| Compressive 0° | 2 | 12.7 | 80 | 5 | 1.3 | D695 |
| 90° | 2 | 12.7 | 80 | 5 | 1.3 | |
| Flexural 0° | 2 | 25.4 | 80 | 5 | 2.8 | D790 |
| 90° | 2 | 25.4 | 80 | 5 | 2.8 | |
| Shear In-plane | 2 | 25.4 | 280 | 5 | 2 | D3518 |
| Interlaminar | 2 | 6.4 | 12.7 | 10 | 1.3 | D2344 |

EXAMPLE 1

An Si-Ti-C-O fiber [Tyranno fiber (trade name), 1,600 filaments, manufactured by Ube industries, Ltd.] was heat-treated by passing it through an electric oven adjusted to 750°C and having a length of 1 m at a rate of 1 m/minute. Thereafter, this heat-treated fiber was immersed in a water solution containing 0.4 % by weight of N-phenyl-γ-aminopropyltrimethoxysilane (Y9669, manufactured by Nippon Unicar) and adjusted to pH of 3.8 with acetic acid. Then, the fiber was surface-treated by passing it through a heating bath adjusted to 150°C and having a length of 4 m, and taken up around a bobbin at a take-up rate of 1 m/minute. The bobbin was then dried in a vacuum oven at 100°C for 20 minutes to remove water completely. The amount of the silane coupling agent adhering to the resultant inorganic fiber was 0.26 part by weight, and it was observed that the silane coupling agent adhered uniformly.

EXAMPLE 2

Example 1 was repeated except that the concentration of the silane coupling agent was changed to 0.1 % by weight, whereby a surface-treated inorganic fiber was obtained. The amount of the adhering silane coupling agent was 0.14 part by weight, and it was observed that the silane coupling agent adhered uniformly.

EXAMPLE 3

Example 1 was repeated except that the temperature adjustment of the electric oven was changed to 500°C, whereby a surface-treated inorganic fiber was obtained. The amount of the adhering silane coupling agent was 0.28 part by weight, and it was observed that the silane coupling agent adhered uniformly.

EXAMPLE 4

Example 2 was repeated except that the silane coupling agent was changed to N-β-(aminoethyl)-γ-aminopropyltrimethoxysilane (A1120, manufactured by Nippon Unicar), whereby a surface-treated inorganic fiber was obtained. The amount of the adhering silane coupling agent was 0.14 part by weight, and it was observed that the silane coupling agent adhered uniformly.

EXAMPLE 5

Example 2 was repeated except that the silane coupling agent was changed to γ-aminopropyltriethoxysilane (A1100, manufactured by Nippon Unicar), whereby a surface-treated inorganic fiber was obtained. The amount of the adhering silane coupling agent was 0.13 part by weight, and it was observed that the silane coupling agent adhered uniformly.

EXAMPLES 6-8

A heat-resistant epoxy resin containing MY720 (resin, manufactured by Ciba Geigy) and HT976 (curing agent, manufactured by Ciba Geigy) in a weight ratio of 100:52 was dissolved in a methyl ethyl ketone/acetone mixture solution having a weight ratio of 1/1, whereby a solution having a concentration of 35 % by weight was formed. The surface-treated inorganic fibers obtained in Examples 1 to 3 were impregnated with this solution, and then taken up around cylindrical drums.

The drums were heat-treated in a heating oven at 90°C for 12 minutes, and then with a heating roll at 110°C for 3 minutes to prepare unidirectionally arranged prepregs having a thickness of 0.16 mm. These prepregs had tacky nature. Table 1 shows analysis results of these prepregs.

EXAMPLES 9 and 10

The surface-treated inorganic fibers obtained in Examples 4 and 5 were impregnated with a solution of 28 % by weight of a bismaleimide resin (Kerimid 601, manufactured by Rhone Poulenc) in dimethylacetamide, and then taken up around cylindrical drums.

The drums were heat-treated in a heating oven at 100°C for 15 minutes, and then with a heating roll at 60°C for 4 minutes to form unidirectionally arranged prepregs having a thickness of 0.2 mm. These prepregs had tacky nature.

Table 1 shows analysis results of these prepregs.

TABLE 1

| Example | Matrix resin | Resin content wt.% | Volatile content wt.% |
|---|---|---|---|
| 6 | Heat-resistant epoxy resin | 28 | <1 |
| 7 | ditto | 27 | <1 |
| 8 | ditto | 29 | <1 |
| 9 | Bismaleimide resin | 27 | 7 |
| 10 | ditto | 28 | 7 |

EXAMPLE 11

The prepregs (12 sheets) obtained in Example 6 were laid up in one direction, and formed into a laminated plate having a thickness of 2 mm in an autoclave (maximum pressure: 8 $kg/cm^2$) at 180°C for 2 hours. Test pieces for measurement of mechanical properties were taken from the plate by using a diamond saw, and the mechanical properties thereof were evaluated. Table 2 shows the results. The scanning electron microscopic observation of the fractured cross section of a test piece used for 90° direction tensile test showed that the resin and the fiber were firmly bonded in the interface.

EXAMPLE 12

Example 11 was repeated except that the prepregs were changed to those obtained in Example 8, whereby a unidirectionally laminated material was obtained. Table 2 shows the results of tests of its mechanical properties.

COMPARATIVE EXAMPLES 1 and 2

Example 1 was repeated except that the temperature adjustment of the electric oven was changed to 300°C (Comparative Example 1) or 1050°C (Comparative Example 2), whereby surface-treated inorganic

fibers were obtained. By using these fibers, prepregs were prepared in the same way as in Example 6, and further, unidirectionally laminated materials were prepared in the same way as in Example 11. Table 2 shows the results of tests of their mechanical properties.

COMPARATIVE EXAMPLE 3

Example 1 was repeated except that no heat treatment was carried out but only the treatment with the silane coupling agent was carried out, whereby a surface-treated inorganic fiber was obtained. Then, the procedure of Example 6 was repeated to form prepregs, and unidirectionally laminated material was prepared in the same way as in Example 11. Table 2 shows the results of test of its mechanical properties.

Example 13

The prepregs (10 sheets) obtained in Example 10 were laid up in one direction, shaped in an autoclave (maximum pressure: 4 $kg/cm^2$) at 180 °C for 2 hours, and further, post-cured in a heating oven at 200 °C for 8 hours to give a unidirectionally laminated material having a thickness of 2 mm. Test pieces for measurement of its mechanical properties were prepared from this laminated material, and the mechanical properties thereof were evaluated. Table 2 shows the results.

EXAMPLE 14

The surface treatment in Example 1 was repeated except that the Tyranno fiber (trade name) was changed to a silicon carbide fiber [Nicalon (trade name), 500 filaments], and by using this surface-treated fiber, prepregs were prepared in the same way as in Example 6. Further, by using these prepregs, a unidirectionally laminated material was preprared in the same way as in Example 11. Table 2 shows the results of tests of the mechanical properties thereof.

TABLE 2

| | Example | | | | Comparative Example | | |
|---|---|---|---|---|---|---|---|
| | 11 | 12 | 13 | 14 | 1 | 2 | 3 |
| VF (%) | 60 | 59 | 63 | 60 | 61 | 59 | 60 |
| Tensile 0° | 178 | 175 | 172 | 168 | 173 | 145 | 170 |
| strength ($kg/mm^2$) 90° | 9.8 | 9.1 | 7.5 | 8.3 | 8.3 | 6.4 | 7.5 |
| Compressive 0° | 173 | 170 | 162 | 157 | 155 | 125 | 139 |
| strength ($kg/mm^2$) 90° | 25.1 | 23.5 | 18.2 | 26.7 | 20.4 | 13.7 | 17.2 |
| Flexural 0° | 214 | 210 | 205 | 212 | 205 | 165 | 202 |
| strength ($kg/mm^2$) 90° | 20.8 | 19.5 | 15.7 | 16.8 | 17.6 | 13.0 | 15.5 |
| Shear strength In-pane | 13.6 | 13.5 | 12.5 | 11.2 | 10.7 | 7.6 | 9.0 |
| ($kg/mm^2$) Interlaminar | 11.5 | 11.4 | 11.0 | 9.1 | 11.3 | 9.2 | 11.0 |

## Claims

1. A method of treating an inorganic fiber to improve the strength properties of composites prepared therefrom which comprises:
subjecting at least one inorganic fiber selected from
an inorganic fiber containing silicon, M, carbon and oxygen and comprising
i) a non-crystalline substance consisting essentially of Si, M, C and O,
ii) an aggregate composed of crystalline fine particles consisting essentially of β-SiC, MC, a solid solution of β-SiC and MC and $MC_{1-x}$ and having a particle diameter of not more than 500Å, noncrystalline

$SiO_2$ and noncrystalline $MO_2$, or

iii) a mixture of the non-crystalline substance specified in the above i) with the aggregate specified in the above ii) wherein M represents Ti or Zr and x is a numerical value satisfying $0<x<1$,

and,

a silicon carbide fiber

to heat treatment at a temperature between 400° C and 1,000° C under oxygen-containing atmosphere, and then

subjecting the heat-treated inorganic fiber to surface treatment with a silane-coupling agent.

2. A method according to claim 1, wherein the' silane-coupling agent is a compound represented by the following formula

$Z(CH_2)_nSi(OR)_3$

wherein Z is selected from Cl-,

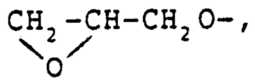

$NH_2CONH$-, and $Y[NH(CH_2)_m]_xNH$- in which x is 0 or 1, m is an integer of 1 to 10, Y is a hydrogen atom, an aryl group having 6 to 10 carbon atoms or an aryl alkylene group having 6 to 10 carbon atoms, n is an integer of 1 to 10, and R is a hydrogen atom or an alkyl group having 1 to 6 carbon atoms.

3. A method according to claim 2, wherein the silane coupling agent is, an aminoalkyl-substituted silane and the aminoalkyl-substituted silane is a salt of an acid.

4. A method according to claim 1, 2 or 3 wherein the amount of silane coupling agent adhering to the inorganic fiber is 0.01 to 1 part by weight based on 100 parts by weight of the inorganic fiber.

5. A composite material comprising inorganic fiber treated in accordance with any one of claims 1 to 4 and a thermosetting resin with which the inorganic fiber is impregnated.

6. A composite material according to claim 5, which contains 30 to 80% by volume of the inorganic fiber.

7. A laminated material comprising laminated prepregs prepared by impregnating inorganic fiber treated in accordance with any one of claims 1 to 4 with a thermosetting resin.

FIG. 1